# EUROPEAN PATENT APPLICATION

(11) **EP 2 892 222 A1**
(43) Date of publication of application: **08.07.2015**
(21) Application number: 13831013.1
(22) Date of filing: 07.06.2013
(51) Int. Cl.: H04N 5/232, G03B 15/00, H04N 5/225

(54) **CONTROL DEVICE AND STORAGE MEDIUM**

(30) Priority: 23.08.2012 JP 2012184045
(71) Applicant: Sony Corporation, Tokyo 108-0075 (JP)
(72) Inventor: SAKO, Yoichiro, Tokyo 108-0075 (JP); KAMADA, Yasunori, Tokyo 108-0075 (JP); KOGA, Yuki, Tokyo 108-0075 (JP); ASADA, Kohei, Tokyo 108-0075 (JP); SAKODA, Kazuyuki, Tokyo 108-0075 (JP); KON, Takayasu, Tokyo 108-0075 (JP); WATANABE, Kazuhiro, Tokyo 108-0075 (JP); HAYASHI, Kazunori, Tokyo 108-0075 (JP); TAKEHARA, Mitsuru, Tokyo 108-0075 (JP); NAKAMURA, Takatoshi, Tokyo 108-0075 (JP); TANGE, Akira, Tokyo 108-0075 (JP); ONUMA, Tomoya, Tokyo 108-0075 (JP); HANAYA, Hiroyuki, Tokyo 108-0075 (JP)
(74) Representative: MFG Patentanwälte Meyer-Wildhagen Meggle-Freund Gerhard PartG mbB
(86) International application number: PCT/JP2013/065872
(87) International publication number: WO 2014/030407

(57) **Abstract**

Provided is a control apparatus including a detector configured to detect current position information, a setting part configured to set information-for-recognition that varies depending on position information, a recognition part configured to recognize a given target shown by the information-for-recognition set by the setting part in accordance with the current position information detected by the detector, and a controller configured to control at least one of an imaging part and a sound pick-up part in accordance with a recognition result obtained by the recognition part.

## Description

### Technical Field

The present invention relates to a control apparatus and a storage medium.

### Background Art

In tourist destinations and resort facilities, a lot of people generally do photo shooting and video shooting for making memories. Further, in large amusement parks, the so-called theme parks, cameras installed at main points of attractions perform automatic shooting when a ride arrives, and when people get out of the ride, photographs are printed out and sold to those who wish to buy the photographs. However, there have been dissatisfactions that it takes a long time for the photographs to be printed out, and that a plurality of photographs cannot be printed out at once since the systems are independent for each attraction.

In order to solve the above-mentioned dissatisfactions, for example, Patent Literatures 1 and 2 each disclose an image shooting system for distributing communication means such as a wireless tag only to visitors to be shot and performing shooting by cameras installed in a park on the basis of the detection of identification information sent from the communication means.

Further, in Patent Literature 3 discloses a shutter device to be distributed to visitors. The shutter device sounds an alarm from a speaker when arriving at a photo spot, and notifies a user that it is the photo spot. In addition, the shutter device can instruct a camera installed at the photo spot to perform shooting in response to the user's button pressing operation.

On the other hand, there has recently been known a wearable camera that is worn by the user and keeps shooting automatically the outside world. Further, since the wearable camera keeps shooting the daily life, that is, the life of the user, the wearable camera is also referred to as a life log camera.

Regarding such a wearable camera, Patent Literature 4 discloses technology using a normal shooting mode and an auto shooting mode in a switching manner, the auto shooting mode performing shooting automatically while a user wears the camera.

### Citation List

### Patent Literature

| | |
|---|---|
| Patent Literature 1: | JP 2001-177750A |
| Patent Literature 2: | JP 2003-116127A |
| Patent Literature 3: | JP 2003-78804A |
| Patent Literature 4: | JP 2004-356970A |

### Summary of Invention

### Technical Problem

However, in the systems disclosed in Patent Literatures 1 to 3, only the visitors each having the wireless tag or the like are to be shot, and it is not possible to select and shoot a favorite target that the visitors want to shoot. Further, the wearable camera (life log camera) described above only shoots the outside world successively, and cannot select and shoot a favorite target that the user wants to shoot.

Further, in a so-called theme park, there are usually characters unique to the theme park, and in many cases, visitors shoot favorite characters and perform shooting together with the favorite characters. Further, in zoos and aquariums, users generally shoot animals/fish that are unique to those places, such that the users intentionally shoot animals/fish that only exist at those places.

Accordingly, the present disclosure proposes a control apparatus and a storage medium which are novel and improved and which are capable of automatically setting a target of imaging or sound pick-up in accordance with a current position.

### Solution to Problem

According to the present disclosure, there is provided a control apparatus including a detector configured to detect current position information, a setting part configured to set information-for-recognition that varies depending on position information, a recognition part configured to recognize a given target shown by the information-for-recognition set by the setting part in accordance with the current position information detected by the detector, and a controller configured to control at least one of an imaging part and a sound pick-up part in accordance with a recognition result obtained by the recognition part.

According to the present disclosure, there is provided a storage medium having a program stored therein, the program being for causing a computer to function as a detector configured to detect current position information, a setting part configured to set information-for-recognition that varies depending on position information, a recognition part configured to recognize a given target shown by the information-for-recognition set by the setting part in accordance with the current position information detected by the detector, and a controller configured to control at least one of an imaging part and a sound pick-up part in accordance with a recognition result obtained by the recognition part.

### Advantageous Effects of Invention

According to the present disclosure as described above, a target of imaging or sound pick-up can be automatically set in accordance with a current position.

### Brief Description of Drawings

[FIG. 1] FIG. 1 is a diagram illustrating an overview of a control system according to an embodiment of the present disclosure.
[FIG. 2] FIG. 2 is a block diagram showing a configuration of a digital camera according to the present embodiment.
[FIG. 3A] FIG. 3A is a diagram showing an example of information-for-recognition according to the present embodiment.
[FIG. 3B] FIG. 3B is a diagram showing an example of preference information according to the present embodiment.
[FIG. 4] FIG. 4 is a block diagram showing a functional configuration of a CPU according to the present embodiment.
[FIG. 5] FIG. 5 is a flowchart showing operation processing of the digital camera according to the present embodiment.
[FIG. 6] FIG. 6 is a diagram showing an overall configuration of a control system according to a first modified example of the present embodiment.
[FIG. 7] FIG. 7 is a diagram showing a configuration of a server according to the first modified example.
[FIG. 8A] FIG. 8A is a flowchart showing operation processing of the control system according to the first modified example.
[FIG. 8B] FIG. 8B is a flowchart showing the operation processing of the control system according to the first modified example.
[FIG. 9] FIG. 9 is a diagram showing an overall configuration of a control system according to a second modified example of the present embodiment.
[FIG. 10] FIG. 10 is a block diagram showing a configuration of an external device according to the present embodiment.
[FIG. 11] FIG. 11 is a flowchart showing operation processing of the control system according to the second modified example.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

Further, the description will be given in the following order.
1. Overview of control system according to embodiment of present disclosure
2. Configuration of digital camera
3. Operation processing
4. Modified example
   4-1. First modified example
   4-2. Second modified example
5. Conclusion

### <1. Overview of control system according to embodiment of present disclosure>

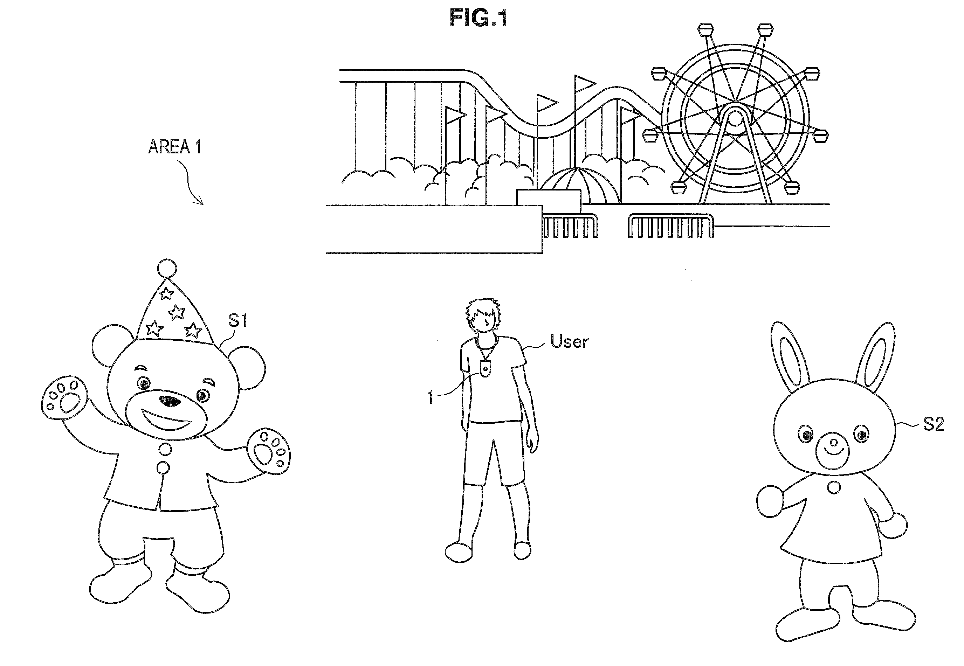

First, with reference to FIG. 1, an overview of a control system according to an embodiment of the present disclosure will be described. FIG. 1 is a diagram illustrating an overview of a control system according to an embodiment of the present disclosure. In the control system according to the present embodiment, the case is assumed where a user carrying a digital camera (control apparatus) 1 according to the present embodiment is located at, in addition to a large amusement park (so-called theme park) as shown in FIG. 1, a specific place such as a zoo, an aquarium, an event site, or a wedding hall.

Further, a digital camera 1 according to the present embodiment may be a wearable camera that can shoot the outside world while being worn by a user. To be more specific, as shown in FIG. 1, for example, the digital camera 1 is worn by the user with the side on which an imaging lens is provided facing the outside, and can shoot the outside world successively or in response to the user operation. Note that the way of wearing the digital camera 1 according to the present embodiment is not limited to the way in which the digital camera 1 worn around the user's neck as shown in FIG. 1. For example, the digital camera 1 may be attached to the user's hat, clothes, bag, and the like, or may be put into a pocket of the user's clothes.

Note that, although the example of FIG. 1 shows the wearable digital camera 1 as an example of the control apparatus, the control apparatus according to the present embodiment is not limited to the wearable digital camera, and may be a normal digital camera that is held by the user's hands when performing shooting. Further, the functions of the control apparatus according to the present embodiment is not limited to the function of shooting a given target, and may include the function of recording (performing sound pick-up of) a given target. To be specific, the control apparatus of the present embodiment may be a wearable/hand-held digital video camera performing shooting and recording (sound pick-up), and may be a wearable/hand-held voice recorder performing recording (sound pick-up).

Here, in a theme park (area 1) shown in FIG. 1, there are characters S1 and S2 that are unique to the theme park, so the visitors generally want to shoot/record things that are unique to that place if possible. However, a general wearable camera (life log camera) and a general voice recorder only shoot and record the surrounding at random, and it has been difficult for the general wearable camera (life log camera) and the general voice recorder to select a target to be shot and recorded.

Accordingly, the control system according to each embodiment of the present disclosure has been created in view of the circumstances described above. The control system according to each embodiment of the present disclosure can automatically set a target of imaging or recording (sound pick-up) in accordance with a current position.

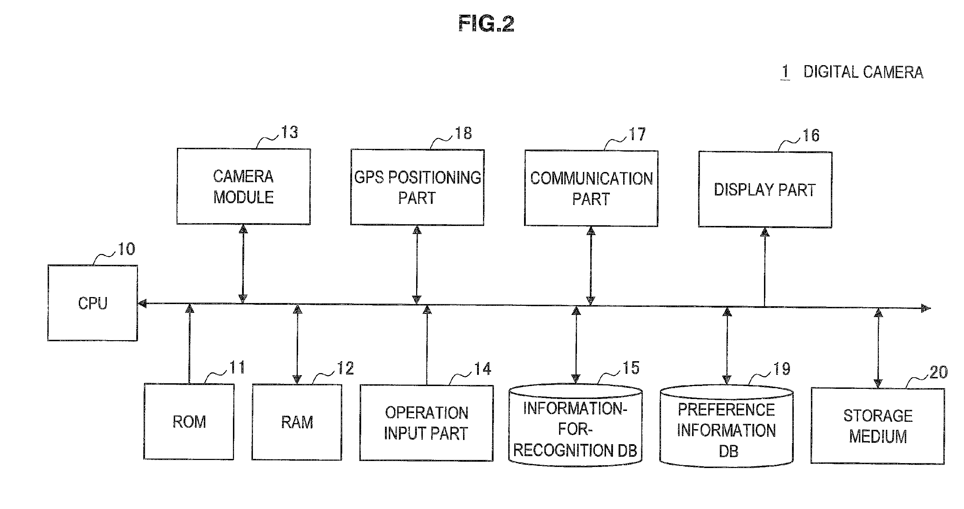

Heretofore, an overview of the control system according to an embodiment of the present disclosure has been described. Subsequently, with reference to FIGS. 2 to 4, a configuration of the digital camera 1 according to the present embodiment will be described in detail.

### <2. Configuration of digital camera>

### [2-1. Basic configuration]

FIG. 2 is a block diagram showing a configuration of the digital camera 1 according to the present embodiment. As shown in FIG. 2, the digital camera 1 according to the present embodiment includes a CPU 10, ROM 11, RAM 12, a camera module 13, an operation input part 14, an information-for-recognition database (DB) 15, a display part 16, a communication part 17, a GPS positioning part 18, a preference information DB 19, and a storage medium 20. Hereinafter, each component will be described specifically.

### (Camera module)

The camera module 13 includes an imaging optical system including an image sensor and an imaging lens, and a shot image signal processing part, and outputs data of a shot image that is converted into digital signals. Note that the image sensor is achieved by a charge coupled device (CCD) imager and a complementary metal oxide semiconductor (CMOS) imager, for example.

### (Operation input part)

The operation input part 14 accepts an operation input performed by a user. The operation input part 14 is a power switch, a shutter button, or an operation button, for example. The shutter button is a shooting instruction part that issues an instruction to perform shooting to the camera module 13, and may be in a button form or may also be in a string form (configuration in which instruction to perform shooting is issued by pulling the string).

### (Information-for-recognition DB)

The information-for-recognition DB 15 is a storage for storing information-for-recognition showing a given target that varies depending on position information. The information-for-recognition may be data for recognizing a given target in terms of image/audio. Further, the information-for-recognition is used in a setting part 110 and a recognition part 120 included in the CPU 10, which will be described later.

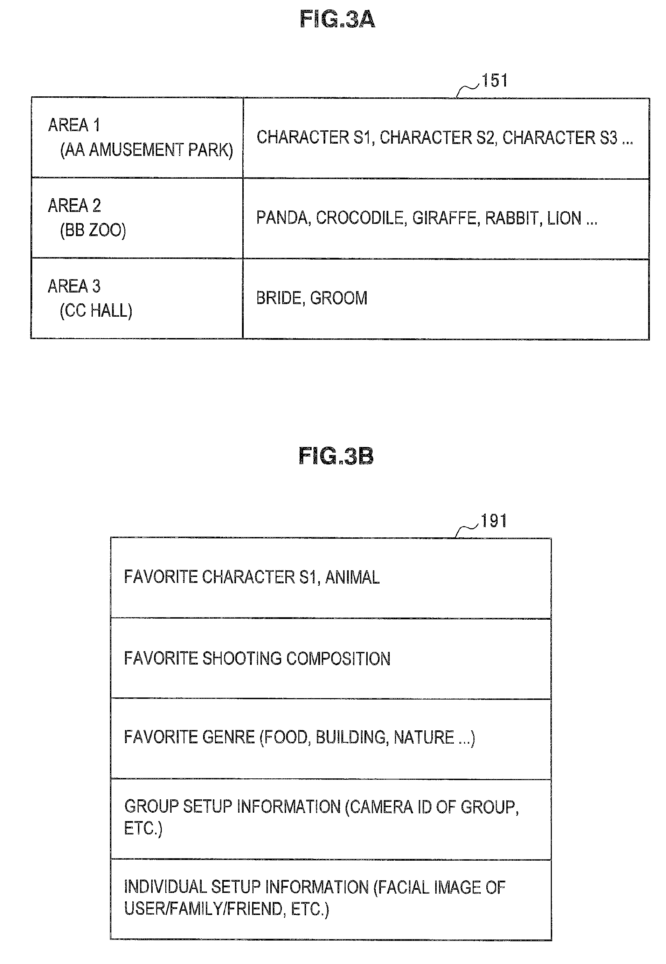

Here, FIG. 3A shows an example of the information-for-recognition 151 according to the present embodiment. As shown in FIG. 3A, the information-for-recognition according to the present embodiment is stored in association with position information. To be more specific, for example, an area 1 (AA amusement park) is associated with information-for-recognition of characters S1 to S3, an area 2 (BB zoo) is associated with information-for-recognition of a panda, a crocodile, a giraffe, a rabbit, and a lion, and an area 3 (CC hall) is associated with information-for-recognition of a bride and a groom.

### (Preference information DB)

The preference information DB 19 is a storage for storing user's preference information. The preference information stored in the preference information DB 19 may be information input by the user when basic setup of the digital camera 1 is performed. FIG. 3B shows an example of preference information 191 according to the present embodiment. As shown in FIG. 3B, the preference information 191 may be the user's favorite characters and animals, favorite shooting composition, and favorite genre (for example, food, building, and nature). Further, the preference information 191 may also include individual setup information (for example, image/audio data for recognizing the user, family, and friends) and group setup information (for example, camera ID of a given group).

Such preference information 191 is reflected when setting information-for-recognition in the setting part 110 of the CPU 10, which will be described later. For example, taking into account the information-for-recognition 151 and the preference information 191, the setting part 110 to be described later can selectively set a character corresponding to the user's preference from among a plurality of characters S1 to S3 associated with the area 1.

### (Display part)

The display part 16 displays in real time an image shot by the camera module 13 (through image display processing), and displays a shot image (still image/moving image) stored in the storage medium 20. Further, the display part 16 may be achieved by a liquid crystal display (LCD) or an organic light-emitting diode (OLED), for example.

### (Communication part)

The communication part 17 is a communication interface for performing data communication with an external device. For example, the communication part 17 may establish connection with the external device through a wireless LAN, Wi-Fi, infrared data communication, and Bluetooth (registered trademark). Further, the communication part 17 according to the present embodiment may receive information-for-recognition corresponding to a current position of the digital camera 1 from the external device, for example.

### (GPS positioning part)

The global positioning system (GPS) positioning part 18 receives radio waves from GPS satellites, and measures a position at which the digital camera 1 is located. Note that the GPS positioning part 18 is an example of a detector that detects the current position information of the digital camera 1 on the basis of signals acquired from outside, and the examples of the detector according to the present embodiment is not limited thereto. For example, the detector may detect the current position information by transmission/reception using WiFi, a mobile phone/PHS/smartphone, and the like, or by near field communication.

### (Storage medium)

The storage medium 20 is an image storage that retains images shot by the camera module 13, and may be achieved by flash memory such as card-type memory and a recording medium such as a digital versatile disc (DVD). The storage medium 20 may retain only given shot images corresponding to shooting control timings of a shooting controller 130 of the CPU 10 out of the shot images (through images) successively output from the camera module 13. Further, the storage medium 20 may retain the shot images (through images) successively output from the camera module 13 as a moving image (video data).

### (CPU, ROM, RAM)

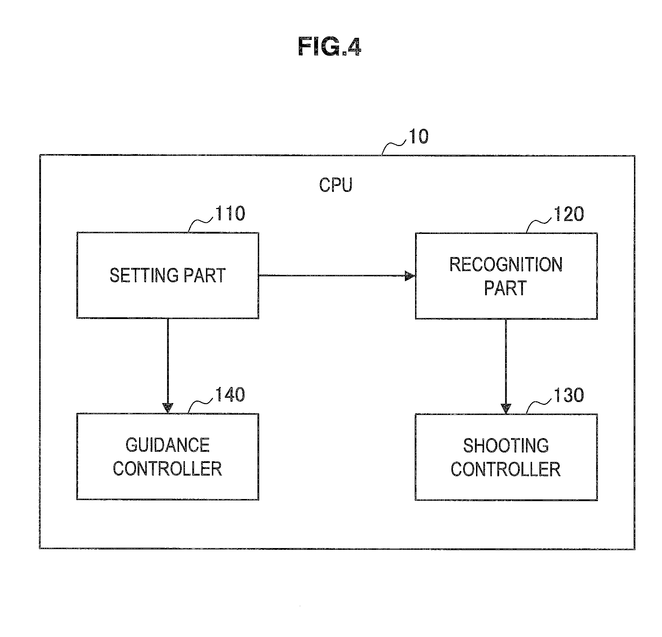

The CPU 10 is a controller that controls each component of the digital camera 1. Specific functions of the CPU 10 according to the present embodiment will be described later with reference to FIG. 4. The ROM 11 stores a program and the like for the CPU 10 to execute each processing. Further, the RAM 12 is used as a work area while the CPU 10 executes a program stored in the ROM 11.

### [2-2. Specific functions of CPU]

Next, with reference to FIG. 4, specific functions of the CPU 10 according to the present embodiment will be described. FIG. 4 is a block diagram showing a functional configuration of the CPU 10 according to the present embodiment. As shown in FIG. 4, the CPU 10 functions as a setting part 110, a recognition part 120, a shooting controller 130, and a guidance controller 140.

### (Setting part)

The setting part 110 sets information-for-recognition corresponding to a current position of the digital camera 1 measured by the GPS positioning part 18. As shown in FIG. 3A, since different pieces of information-for-recognition 151 are associated for each position in the information-for-recognition DB 15, the setting part 110 references the information-for-recognition DB 15, and sets the information-for-recognition corresponding to the current position of the digital camera 1. For example, in the case where the current position of the digital camera 1 is the area 1 (amusement park), the setting part 110 references the information-for-recognition DB 15, and sets information-for-recognition (data for facial recognition/voice recognition) of the characters S1 to S3 (recognition targets).

Further, the setting part 110 may also set the information-for-recognition taking into account preference information of a user. To be specific, for example, the setting part 110 may selectively set, out of the plurality of characters S1 to S3 associated with the area 1, a character in accordance with the preference of the user taking into account the preference information of the user. Alternatively, the setting part 110 may set, out of the plurality of characters S1 to S3, a character selected by the user.

Further, the setting part 110 may set the information-for-recognition on the basis of the preference information of the user. For example, in the case where the user's favorite genre is food, the setting part 110 may set the information-for-recognition of "dish".

Still further, in addition to the given targets (for example, characters S1 to S3) corresponding to the position information, the setting part 110 may set the family or friends of the user as the given targets on the basis of the preference information of the user. In this way, the digital camera 1 can automatically acquire shot images that include the characters S1 to S3, the family, and the friends in the angle of views.

### (Recognition part)

The recognition part 120 recognizes the given target shown by the information-for-recognition set by the setting part 110. To be more specific, the recognition part 120 analyzes through image taken by the camera module 13, and thus recognizes the given target (recognition target) shown by the information-for-recognition set by the setting part 110. For example, the setting part 110 may analyze the through image, and may perform the facial recognition of the characters S1 to S3. Further, the recognition part 120 may analyze voice collected by a microphone (not shown), and thus may recognize the given target (recognition target) shown by the information-for-recognition set by the setting part 110.

### (Shooting controller)

In the case where the recognition part 120 recognizes a given target, the shooting controller 130 performs control (shooting control) in a manner that a through image including the given target in the angle of view is stored in the storage medium 20. Further, in the case where through images successively shot by the camera module 13 are sequentially stored in the storage medium 20, the shooting controller 130 may assign a mark to a frame including the given target recognized by the recognition part 120 in the angle of view (mark assigning control).

### (Guidance controller)

The guidance controller 140 performs control so as to guide a user in a direction that the given target set by the setting part 110 is located. To be specific, the guidance controller 140 displays on the display part 16 an arrow indicating a direction in which the characters S1 to S3 are located, or guides the user in a direction that the characters S1 to S3 are located through a voice from a speaker (not shown) included in the digital camera 1. Further, the guidance controller 140 may receive the pieces of position information of the characters S1 to S3 through the communication part 17, and may estimate the directions in which the characters S1 to S3 are located by comparing the pieces of position information of the characters S1 to S3 with the current position information and the direction information of the digital camera 1. Note that the guidance controller 140 can acquire the direction information of the digital camera 1 from a result obtained by analyzing the through image or a direction detection part (not shown) that detects the direction of the digital camera 1.

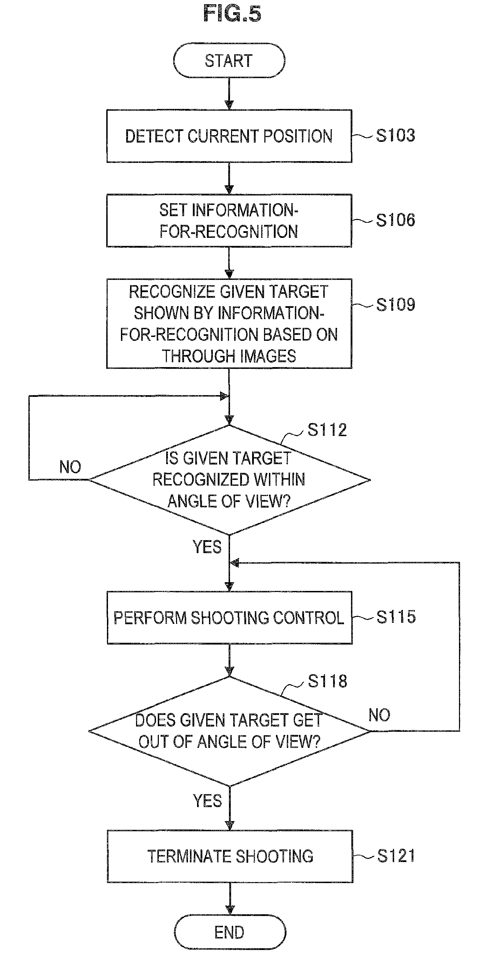

Heretofore, a configuration of the digital camera 1 according to the present embodiment has been described in detail. Subsequently, with reference to FIG. 5, shooting control processing of the digital camera 1 according to the present embodiment will be described in detail.

### <3. Operation processing>

FIG. 5 is a flowchart showing operation processing of the digital camera 1 according to the present embodiment. As shown in FIG. 5, first, in Step S103, the digital camera 1 detects the current position of the digital camera 1 using the GPS positioning part 18.

Next, in Step S106, the setting part 110 sets information-for-recognition in accordance with the detected current position. Note that the setting part 110 may set the information-for-recognition corresponding to the current position by extracting the information-for-recognition from the information-for-recognition DB 15, or by acquiring the information-for-recognition from an external device.

Next, in Step S109, the recognition part 120 recognizes a given target shown by the information-for-recognition set by the setting part 110 on the basis of through images successively shot by the camera module 13.

Subsequently, in Step S112, in the case where the given target is recognized within the angle of view, the shooting controller 130 performs shooting control in the subsequent Step S115. To be specific, as described above, the shooting controller 130 performs control such that the through image including the given target within the angle of view is stored in the storage medium 20.

Next, in Step S118, the CPU 10 determines whether the given target gets out of the angle of view. As shown in FIG. 5, the shooting controller 130 may repeat the shooting control shown in Step S115 as long as the given target is included within the angle of view. In this case, the shooting controller 130 may repeat the shooting control regularly (for each one second, for each five seconds, for each 30 seconds, and the like)/irregularly.

Next, in the case where the given target gets out of the angle of view (S118/No), the CPU 10 terminates the shooting control (storage control on the storage medium 20) in Step S121.

Heretofore, the shooting control processing of the digital camera 1 according to the present embodiment has been described. In this way, the digital camera 1 according to the present embodiment can automatically shoot (store in the storage medium 20) the given target corresponding to the current position. To be specific, when a user wearing the digital camera 1 visits a theme park, the digital camera 1 can automatically shoot characters unique to the theme park. Further, when the user moves out from the theme park and visits a zoo, the digital camera 1 worn by the user can automatically shoot animals unique to the zoo.

Note that, in the case where the digital camera 1 is not set to an auto shooting mode, shooting preparation control may be performed instead of the shooting control shown in Step S115, the shooting preparation control involving performing focusing on and zooming in a given target within the recognized angle of view. In this way, since the given target is automatically focused, the user can perform shooting (storing in the storage medium 20) by operating a shutter button at any timing.

Further, in the case where, in S112, the given target is not recognized within the angle of view, the position information of the given target is received from the outside, and the guidance controller 140 may perform control so as to guide a user in a direction that the given target is located.

### <4. Modified example>

Heretofore, the control system according to the present embodiment has been described. However, the control system according to the present embodiment is not limited to the configuration shown in FIG. 1. Hereinafter, the control system of the present embodiment will be described with reference to a plurality of modified examples.

### [4-1. First modified example]

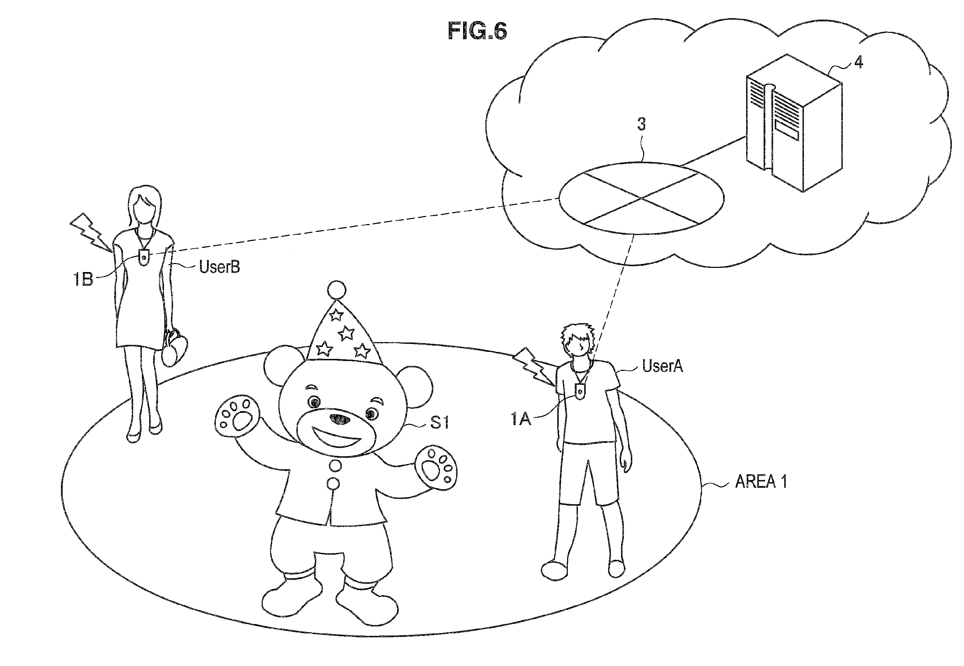

In the embodiment described above, the given target is shot only by the digital camera 1 worn by the user, and in this case, the user himself/herself is not included in the shot image. Accordingly, a first modified example suggests a control system which performs control such that the user is shot by a digital camera worn by another user. A plurality of users shoot the characters S1 to S3 and other users mutually by the digital cameras 1 worn by the respective users, and thus can each acquire a shot image in which the characters S1 to S3 and the user himself/herself are included within the angle of view. Hereinafter, with reference to FIGS. 6 to 8, a specific description will be given.

### (Overview)

FIG. 6 is a diagram showing an overall configuration of a control system according to the first modified example of the present embodiment. As shown in FIG. 6, the control system according to the present modified example includes a plurality of digital cameras 1A and 1B, and a server 4. Further, the plurality of digital cameras 1A and 1B are connected to the server 4 through a network 3 using a wireless LAN or Wi-Fi, for example.

In the control system having such a configuration, in the case where the current position is the area 1, a digital camera 1A worn by a user A sets, among the characters S1 to S3, the character S1 corresponding to the user A's preference as a given target. Then, when the digital camera 1A recognizes the character S1 within the angle of view, the digital camera 1A performs shooting control. However, as described above, the wearable digital camera 1A which is worn by the user A and shoots the outside world is not capable of including the user A within the angle of view. Accordingly, in the present modified example, the following are transmitted to a digital camera 1B worn by a user B, who is another user, through the server 4: preference information of the user A indicating that the user A's preference is the character S 1; and individual setup information of the user A (facial recognition information of the user A and the user A's family).

The digital camera 1B sets the character S1 and the user A as given targets in accordance with the preference information of the user A, and performs shooting control in the case of recognizing the character S1 and the user A within the angle of view. Then, the digital camera 1B transmits the shot image to the server 4.

In this way, the user A can acquire the image having the character S1 shot by the digital camera 1A worn by the user A and the image having the character S1 and the user A shot by the digital camera 1B worn by the other user B. Note that the digital camera 1B is set such that the preference information of the user A and the image which is shot in accordance with the preference information of the user A cannot be viewed by individual setting information, so as to protect the private information of the user A.

Heretofore, an overview of the control system according to the present modified example has been described. Subsequently, a configuration of the server 4 included in the control system of the present modified example, and operation processing of the control system of the present modified example will be described sequentially. Note that the basic configurations of the digital cameras 1A and 1B are the same as the configuration of the digital camera 1 described with reference to FIG. 2, and hence, the description thereof will be omitted.

### (Configuration of server 4)

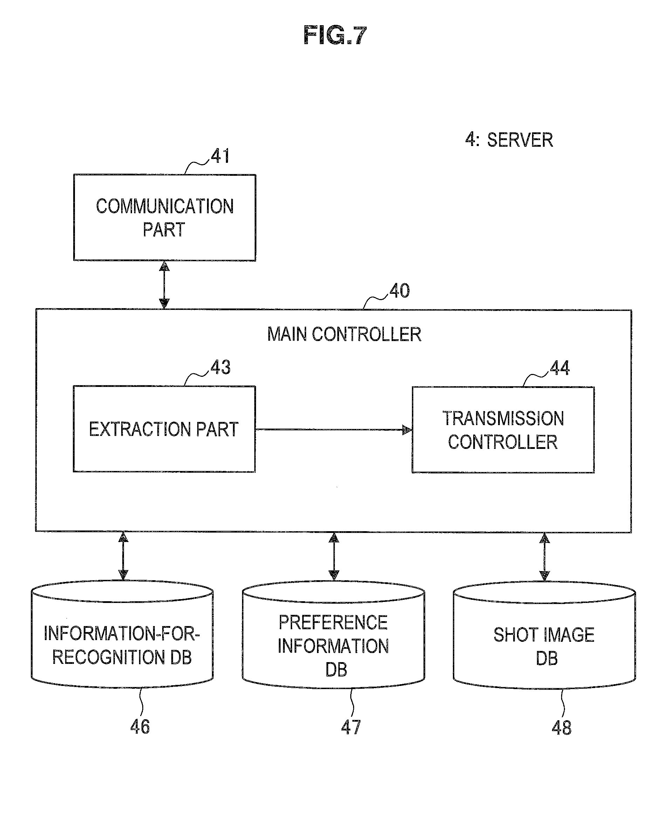

FIG. 7 is a diagram showing a configuration of the server 4 according to the first modified example. As shown in FIG. 7, the server 4 includes a main controller 40, a communication part 41, an information-for-recognition DB 46, a preference information DB 47, and a shot image DB 48.

The main controller 40 controls each component of the server 4. For example, the main controller 40 stores the preference information of the user A transmitted from the digital camera 1A through the communication part 41 in the preference information DB 47. Further, as shown in FIG. 7, the main controller 40 also functions as an extraction part 43 and a transmission controller 44. The extraction part 43 extracts given information-for-recognition from the information-for-recognition DB 46 in accordance with position information transmitted from the digital camera 1, extracts preference information of another user from the preference information DB 47, and extracts a given shot image from the shot image DB 48. The transmission controller 44 controls the communication part 41 such that the information extracted by the extraction part 43 is transmitted to the digital camera 1 of the request source.

The communication part 41 is a communication interface for data communicating with an external device. For example, the communication part 41 receives position information from the digital camera 1 and transmits information-for-recognition corresponding to the position information. Further, the communication part 41 may transmit preference information of another user to the digital camera 1.

In the same manner as the information-for-recognition DB 15 described with reference to FIG. 2, the information-for-recognition DB 46 also stores information-for-recognition associated with the position information.

In the same manner as the preference information DB 19 described with reference to FIG. 2, the preference information DB 47 stores preference information of a user. Further, the pieces of preference information of users stored in the preference information DB 47 are transmitted from the digital cameras 1A and 1B.

The shot image DB 48 stores each of the images shot by the digital cameras 1A and 1B in association with a camera ID and a determination tag. Here, the camera ID represents information for identifying the digital cameras 1A and 1B, and indicates which digital camera has shot the image. Further, the determination tag is information showing under what condition the shooting has been performed, and includes, in addition to basic shooting parameters such as white balance and shutter speed, a shooting date/time, a shooting position, a recognition target that has been set, and information indicating that the recognition target has been set on the basis of whose preference information. In this way, in the case where the user A issues a request to acquire a shot image, the extraction part 43 can extract a shot image associated with the camera ID of the user A's digital camera 1A, and can extract an image in which a recognition target is set on the basis of the preference information of the user A and in which the recognition target is shot.

### (Operation processing)

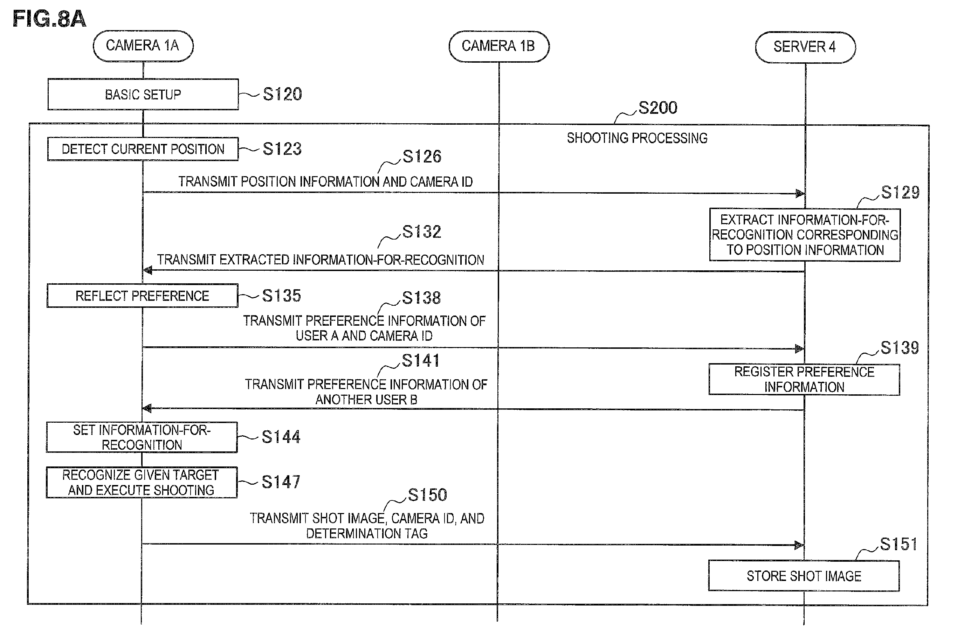

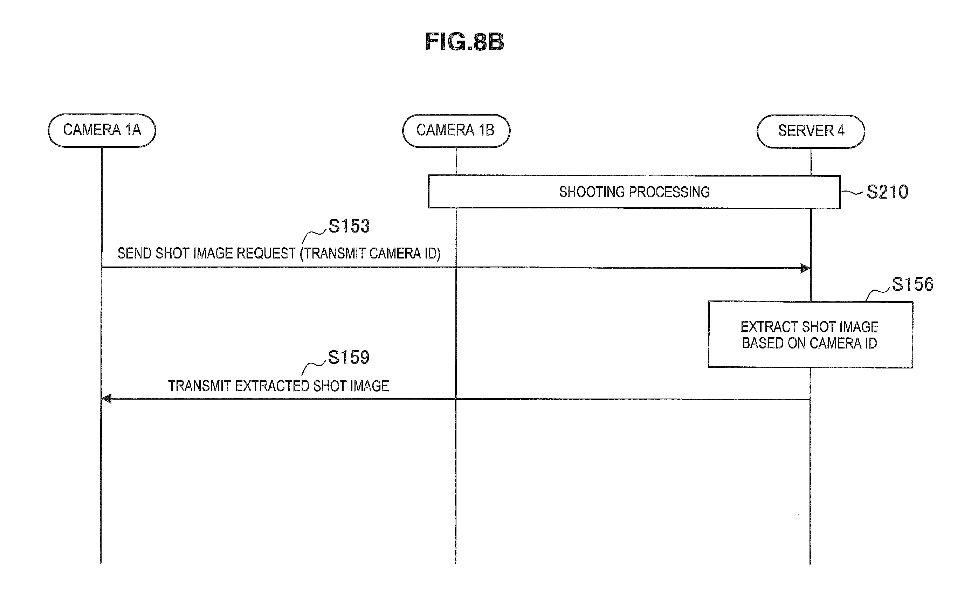

Next, with reference to FIG. 8A and FIG. 8B, operation processing of the control system according to the present modified example will be described. FIG. 8A and FIG. 8B are a flowchart showing operation processing of the control system according to the first modified example.

As shown in FIG. 8A, first, in Step S120, the digital camera 1A performs basic setup. To be specific, the digital camera 1A performs operation setup of the digital camera 1 and setup of user's preference information, for example. The operation setup includes acquisition setting of still image/moving image, acquisition setting of sound, setting of a parameter of image quality/sound quality, setting of intervals in the case of successively acquiring images/sounds, and the like. The user's preference information includes information related to favorite shooting targets (persons, landscapes, foods, animals, flowers, characters, and the like), information related to favorite shooting conditions (composition, shooting parameters such as white balance and shutter speed), group setup information (camera ID of a group and the like), and individual setup information (facial image registration of user/family/friend). Note that the user's preference information may be input through the user operation from the operation input part 14.

Next, in the case where image acquisition is set in S120, the digital camera 1A performs in Step S200 shooting processing. The shooting processing shown in Step S200 specifically represents processing shown in Steps S123 to S151.

First, in Step S123, the digital camera 1A detects a current position using the GPS positioning part 18.

Subsequently, in Step S126, the digital camera 1A transmits position information indicating the detected current position and a camera ID of the digital camera 1A to the server 4.

Next, in Step S129, the extraction part 43 of the server 4 extracts information-for-recognition corresponding to the position information from the information-for-recognition DB 46.

Subsequently, in Step S132, the transmission controller 44 of the server 4 transmits the information-for-recognition extracted by the extraction part 43 to the digital camera 1A.

Note that, in S126 to S132, the processing of acquiring the information-for-recognition corresponding to the position information from the server 4 has been described, but the processing is not necessarily performed, and when the digital camera 1A already has the corresponding information-for-recognition, the processing is not necessary.

Next, in Step S135, the digital camera 1A reflects preference of the user A. To be specific, in the case where given targets shown by the information-for-recognition corresponding to the current position are "characters S1 to S3" and "favorite character" shown by the preference information of the user A is "character S1", the user A's preference "favorite character: character S1" is reflected on the information-for-recognition. Alternatively, the digital camera 1A may display on the display part 16 a selection screen including a plurality of given targets (for example, characters S1 to S3) shown by the information-for-recognition, the selection screen being for allowing the user A to select a given target and may reflect the given target selected by the user A as the user A's preference. Note that in the case where the preference information of the user A is not set or is set to "any", the processing of reflecting the preference shown in Step S135 is not necessary.

Subsequently, in Step S138, the digital camera 1A transmits, to the server 4, the preference information of the user A in association with the camera ID of the digital camera 1A. Note that the timing at which the preference information of the user A is transmitted to the server 4 is not limited to the example shown in FIG. 8A, and may be after the basic setup shown in S120 or simultaneously with the transmission of the position information shown in S126, for example.

Next, in Step S139, the server 4 registers, in the preference information DB 47, the preference information of the user A in association with the camera ID of the digital camera 1A carried by the user A. Note that, in the preference information DB 47 of the server 4, the preference information of each user is registered in association with the camera ID of the digital camera 1 carried by each user.

Subsequently, in Step S141, the server 4 extracts preference information of another user from the preference information DB 47, and transmits the preference information to the digital camera 1A. To be more specific, the server 4 references the position information of the digital camera 1A, and in the case where the preference information of the other user B, who is located in the same area, is registered in the preference information DB 47, the server 4 transmits the preference information.

Next, in Step S144, the setting part 110 of the digital camera 1A sets information-for-recognition corresponding to the position information showing the current position of the digital camera 1A. To be specific, for example, the setting part 110 may set information-for-recognition corresponding to the position information received from the server 4 in S132, or may set information-for-recognition on which the user A's preference is reflected in S135.

Further, the setting part 110 may also set, on the basis of the preference information of the other user B received from the server 4 in S141, information-for-recognition on which the other user B's preference is reflected. For example, information-for-recognition on which the user B's preference "favorite character: character S3" or a facial image of the user B is reflected is set.

Subsequently, in Step S147, the recognition part 120 of the digital camera 1A analyzes through images successively captured by the camera module 13, and recognizes a given target shown by the information-for-recognition set by the setting part 110. For example, the recognition part 120 recognizes whether the character S1 shown by the information-for-recognition is included within the angle of view.

Further, when the given target is recognized by the recognition part 120, the shooting controller 130 executes shooting. To be specific, for example, the shooting controller 130 controls the camera module 13 to execute shooting by performing focusing on the given target, and causes the shot image to be stored in the storage medium 20.

Note that the recognition part 120 may give lower priority to the recognition of the given target shown by the information-for-recognition set on the basis of the other user B's preference information compared to the recognition of the given target shown by the information-for-recognition set on the basis of the preference information of the user A, who is the owner. Further, from the security concerns, an image shot by recognizing the given target shown by the information-for-recognition set on the basis of the other user B's preference information may not be displayed in the digital camera 1A.

Next, in Step S150, the digital camera 1A transmits the shot image, the camera ID, and a determination tag to the server 4.

Subsequently, in Step S151, the server 4 stores in the shot image DB 48 the received shot image, camera ID, and determination tag in association with each other.

Heretofore, the shooting processing between the digital camera 1A and the server 4 shown in Step S200 has been described specifically in S123 to S151. The shooting processing described above is executed between each digital camera 1 and the server 4. For example, in Step S210 shown in FIG. 8B, the same shooting processing is executed between the digital camera 1B and the server 4. Accordingly, the user A's preference information is also transmitted to the digital camera 1B, and the digital camera 1B images the favorite character of the user A and the user A.

In this way, the digital camera 1A worn by the user A acquires the shot image which is the outside world of the user A and includes the given target corresponding to the position information, and the digital camera 1B worn by the other user B acquires the shot image which includes the user A and the given target.

Note that, in the operation processing shown in FIG. 8A and FIG. 8B, the preference information of each user is transmitted to the corresponding digital camera 1 through the server 4 (Steps S138 to S141), but the operation processing shown in the present modified example is not limited thereto. For example, the respective digital cameras 1 may mutually transmit the user's preference information to each other by proximity wireless communication.

Further, in the case where the user A wants to acquire the image shot by the other digital camera 1B on the basis of the preference information of the user A, the user A may acquire the shot image by sending a query from the digital camera 1A to the server 4.

To be specific, in Step S153, the digital camera 1A sends a shot image request to the server 4. In this case, the digital camera 1A transmits the camera ID of the digital camera 1A or the user ID of the user A.

Subsequently, in Step S156, the extraction part 43 of the server 4 references determination tags of shot images stored in the shot image DB 48 and extracts a desired shot image on the basis of the received camera ID of the digital camera 1A. In the determination tag, in the case where the shooting is performed on the basis of the preference information transmitted from the digital camera 1A, the preference information including information indicating shooting conditions, the determination tag includes the preference information and also the camera ID transmitted from the digital camera 1A. In this way, with the use of the camera ID of the digital camera 1A, the server 4 can extract the image shot by the other digital camera 1B on the basis of the user A's preference information.

Note that, although the present modified example uses the camera ID, the present modified example is not limited thereto, and may use a user ID instead of the camera ID, for example.

Next, in Step S159, the server 4 transmits the extracted shot image to the digital camera 1A. In this way, the user A can acquire both the shot image of the outside world of the user A including the character S1 taken by the digital camera 1A and the shot image including the user A and the character S1 taken by the other digital camera 1B.

Further, in S153 to S159, the case where the shot image request is sent from the digital camera 1A has been described, but the present modified example is not limited thereto, and the shot image request may be sent to the server 4 from an information processing apparatus (notebook PC, smartphone, or the like) of the user A, for example.

### [4-2. Second modified example]

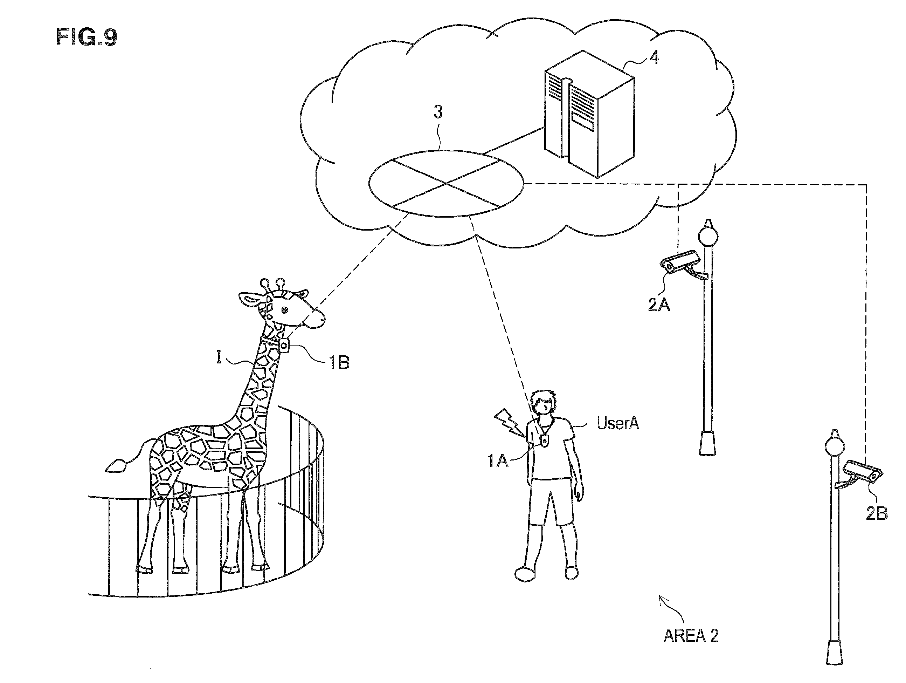

Next, a second modified example of the present embodiment will be described. In the embodiment described above, the digital camera 1 worn by the user is used as an example of the control apparatus, but the control apparatus according to the present embodiment is not limited thereto. For example, the control apparatus according to the present embodiment may be an external device that may be disposed at any places of indoor sites and outdoor sites. Hereinafter, with reference to FIGS. 9 to 11, a specific description will be given.

### (Overview)

FIG. 9 is a diagram showing an overall configuration of a control system according to the second modified example of the present embodiment. As shown in FIG. 9, the control system according to the present modified example includes a plurality of digital cameras 1A and 1B, a plurality of external devices 2A and 2B, and a server 4. Further, the plurality of digital cameras 1A and 1B and the plurality of external devices 2A and 2B are connected to the server 4 through a network 3 using a wireless LAN or Wi-Fi, for example.

Here, in the first modified example described above, the digital camera 1B is worn by the other user B, but it is not limited to the case where the digital camera 1B is worn by a visitor, and the digital camera 1B may be worn by an animal or a character, which is a given target of an area, for example. The second modified example illustrated in FIG. 9 shows as an example the case where the digital camera 1B is worn by an animal in a zoo of an area 2. The operation processing between the digital cameras 1A and 1B, and the server 4 is the same as the first modified example shown in FIGS. 8A and 8B.

The external devices 2A and 2B are disposed on a wall or a ceiling of a building, a lamppost, an attraction (ride) of a theme park around a user, and each have a function of shooting/recording the user from his/her surroundings. Although FIG. 9 shows the example in which a plurality of external devices are disposed, the number of external devices may also be one.

In the control system having such a configuration, the digital cameras 1A and 1B and the external devices 2A and 2B set information-for-recognition corresponding to a current position. For example, in the case where the current position is the area 2 (zoo), information-for-recognition showing an animal I located in the area 2 as the given target is set. Then, the digital cameras 1A and 1B and the external devices 2A and 2B perform shooting control when recognizing the set animal within the angle of view.

Further, in the case of acquiring the user A's preference information, the digital camera 1B and the external devices 2A and 2B set information-for-recognition on which the user A's preference information is reflected, and are also capable of recognizing and shooting the user A's favorite animal and the user A.

In this way, the digital camera 1A worn by the user A shoots the given animal I corresponding to position information, and the external devices 2A and 2B disposed around the user A can shoot the animal I and the user A included within the angle of view.

Heretofore, an overview of the control system according to the present modified example has been described. Subsequently, a configuration of the external device 2 included in the control system of the present modified example, and operation processing of the control system of the present modified example will be described sequentially. Note that the basic configurations of the digital cameras 1A and 1B are the same as the configuration of the digital camera 1 described with reference to FIG. 2, and hence, the description thereof will be omitted.

### (Configuration of external device 2)

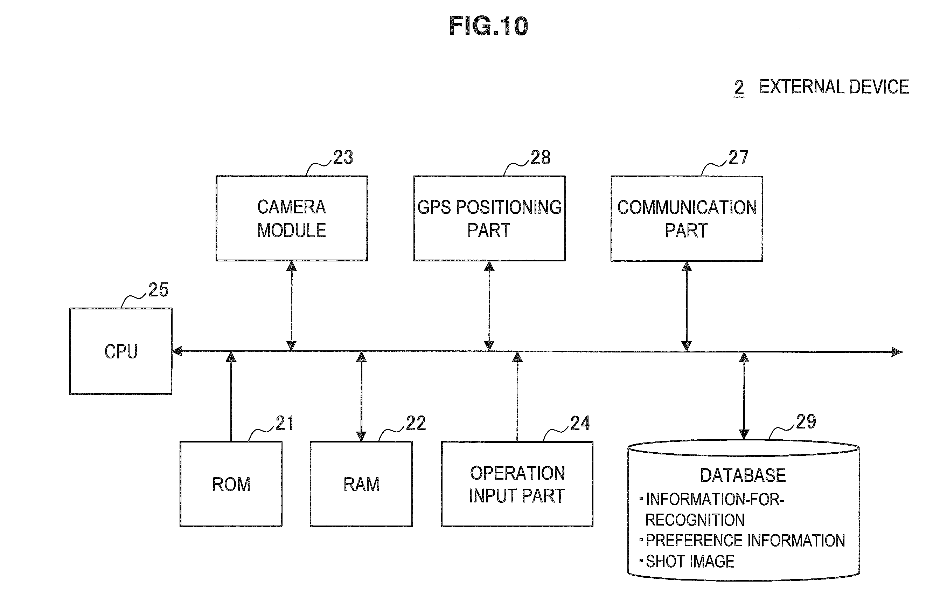

FIG. 10 is a block diagram showing a configuration of the external device 2 according to the present embodiment. As shown in FIG. 10, the external device 2 includes a CPU 25, ROM 21, RAM 22, a camera module 23, an operation input part 24, a communication part 27, a GPS positioning part 28, and a database 29. Since the main functions of the camera module 23, the operation input part 24, the GPS positioning part 28 (detector), the ROM 21, and the RAM 22 are the same as the respective corresponding blocks of the digital camera 1, the description thereof will be omitted.

The communication part 27 is a communication interface for data communicating with an external device. To be more specific, for example, the communication part 27 according to the present embodiment receives the user A's preference information from the digital camera 1A through the server 4 and transmits an image shot by the external device 2 to the server 4 in accordance with the control performed by the CPU 25.

The database 29 is a storage which stores information-for-recognition, preference information of each user, and shot images.

The CPU 25 is a controller which controls each component of the external device 2. For example, the CPU 25 functions as a setting part that sets information-for-recognition corresponding to a current position measured by the GPS positioning part 28. Further, the CPU 25 also functions as a recognition part that analyzes through images successively shot by the camera module 23, and recognizes the given target shown by the set information-for-recognition.

In addition, in the case where the given target is recognized within the angle of view, the CPU 25 also functions as a shooting controller that controls the camera module 23 to execute shooting by performing focusing on the given target, and causes the shot image to be stored in the database 29. Note that, in the case where the through images successively shot by the camera module 23 are sequentially stored in the database 29, the CPU 25 (shooting controller) may assign a mark to a frame (shot image) including the recognized given target within the angle of view.

### (Operation processing)

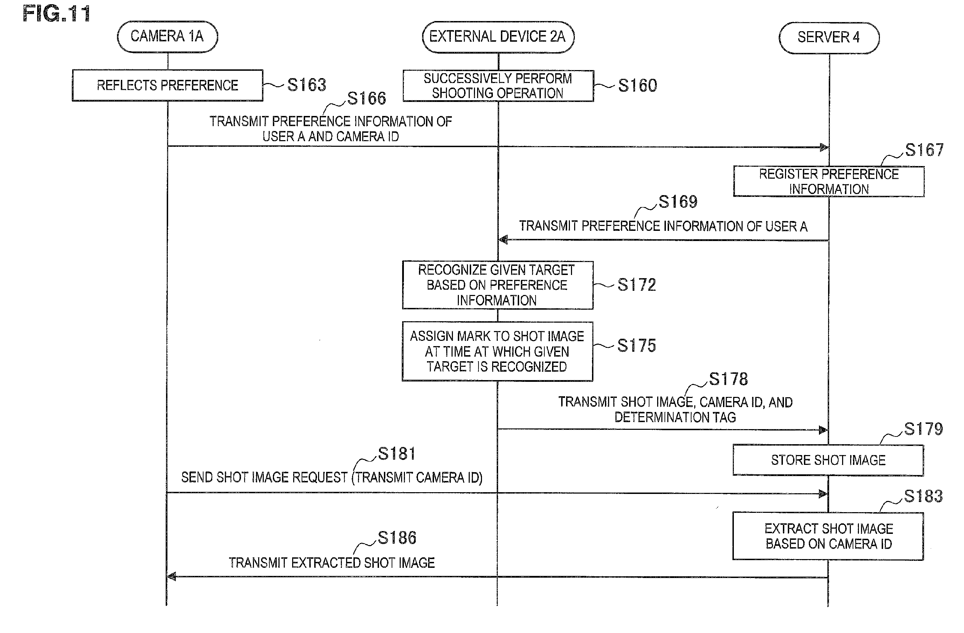

Next, with reference to FIG. 11, operation processing of the control system according to the present modified example will be described. FIG. 11 is a flowchart showing operation processing of the control system according to the second modified example.

As shown in FIG. 11, first, in Step S160, the external device 2A successively performs shooting operation and sequentially stores the shot images in the database 29 as video data. In this case, the external device 2A may set information-for-recognition corresponding to a current position measured by the GPS positioning part 28 and may execute shooting by performing focusing on a given target shown by the information-for-recognition.

On the other hand, in Step S163, the digital camera 1A the digital camera 1A reflects preference of the user A. Subsequently, in Step S166, the digital camera 1A transmits user A's preference information and a camera ID to the server 4. Next, in Step S167, the server 4 registers, in the preference information DB 47, the user A's preference information in association with the camera ID of the digital camera 1A carried by the user A. Note that, since the processing shown in Steps S163 to S167 are the same as the processing of Steps S135 to S139 shown in FIG. 8A, the specific description will be omitted. Further, the processing that is the same as the Steps S123 to S132 shown in FIG. 8A is performed before Step S163, but is omitted in the flow shown in FIG. 11.

Next, in Step S169, the server 4 transmits the user A's preference information to the external device 2A.

Next, in Step S172, the external device 2A sets information-for-recognition on which the received user A's preference information is reflected, analyzes the information-for-recognition using the camera module 23, and thus recognizes a given target shown by the information-for-recognition.

Next, in Step S175, the external device 2A assigns a mark to a still image (frame) shot at the time at which the given target is recognized.

Next, in Step S178, the external device 2A transmits to the server 4 the shot image including at least the frame to which the mark is assigned, the camera ID of the external device 2A, and a determination tag.

Subsequently, in Step S179, the server 4 stores in the shot image DB 48 the received shot image, camera ID, and determination tag in association with each other. Further, among the received shot images, the server 4 may store in the shot image DB 48 the shot image (frame) to which a mark is assigned in association with the camera ID and the determination tag.

Heretofore, the processing performed in the external device 2A has been specifically described, the processing including setting the information-for-recognition corresponding to the current position on which the user A's preference information is reflected, and performing shooting control. Note that, in FIG. 11, the processing related to the shooting control in the digital camera 1A (S141 to S151 shown in FIG. 8A) is not shown.

As described above, the external device 2A can shoot a given target shown by information-for-recognition corresponding to a current position, and additionally can set the information-for-recognition on which the user A's preference information is reflected and can shoot the given target shown by the information-for-recognition. Further, in the case where the external device 2A also functions as a security camera and sequentially stores successively shot images, the external device 2A can distinguish the frame including the given target from other frames by assigning a mark to the frame including the given target.

Next, in the case where the user A wants to acquire an image shot by the external device 2A on the basis of the user A's preference information, the shot image can be acquired by, in the same manner as in the first modified example, sending a query from the digital camera 1A to the server 4.

To be specific, in Step S181, the digital camera 1A sends a shot image request to the server 4. In this case, the digital camera 1A transmits the camera ID of the digital camera 1A or the user ID of the user A.

Subsequently, in Step S181, the extraction part 43 of the server 4 references determination tags of shot images stored in the shot image DB 48 on the basis of the received camera ID of the digital camera 1A, and extracts a desired shot image. In the determination tag, in the case where the shooting is performed on the basis of the preference information transmitted from the digital camera 1A, the preference information including information indicating shooting conditions, the determination tag includes the preference information and also the camera ID transmitted from the digital camera 1A. In this way, with the use of the camera ID of the digital camera 1A, the server 4 can extract the image shot by the external device 2 on the basis of the user A's preference information.

Next, in Step S186, the server 4 transmits the extracted shot image to the digital camera 1A. In this way, the user A can acquire both the shot image of the outside world of the user A including the animal I taken by the digital camera 1A and the shot image including the user A and the animal I taken by the external device 2A.

### <5. Conclusion>

As described above, in the control system according to the present embodiment, the information-for-recognition showing the given target corresponding to the current position is automatically set, and, in the case where the given target is recognized, the given target can be shot/recorded. Accordingly, the present control system can automatically set a shooting/recording target in accordance with the area, such as a unique character in a theme park, and can shoot/record the shooting/recording target by performing focusing on the shooting/recording target.

Further, the present control system can perform shooting/recording under the conditions of the user's preference by setting the information-for-recognition on which the user's preference information is reflected.

In addition, the user's preference information can be reflected not only on the information-for-recognition that is set in a digital camera (an example of control apparatus) worn by the user, but also on the information-for-recognition that is set in an external device (another example of control apparatus) disposed near the user. In this way, the external device can perform shooting/recording by performing focusing on the given target corresponding to the current position and the user.

The preferred embodiments of the present invention have been described above with reference to the accompanying drawings, whilst the present invention is not limited to the above examples, of course. A person skilled in the art may find various alterations and modifications within the scope of the appended claims, and it should be understood that they will naturally come under the technical scope of the present invention.

For example, the preference information is input by user operation, and otherwise, the digital camera 1 may have a learning function and may learn the preference information on the basis of the images shot by the user and the action history, for example.

Further, the digital camera 1 according to the present embodiment may perform the shooting control by focusing on, among the plurality of given targets corresponding to the position information, a given target obtained by reflecting the user's preference information or selected by the user, or a given target which the user approaches (or touches).

Further, taking into account the problem of battery consumption, the digital camera 1 according to the present embodiment may not perform successive through shooting, and may start through shooting using as a trigger a given sound (sound of parade, voice of character, cheer, or the like) corresponding to the position information.

Additionally, the present technology may also be configured as below.
(1) A control apparatus including:
   a detector configured to detect current position information;
   a setting part configured to set information-for-recognition that varies depending on position information;
   a recognition part configured to recognize a given target shown by the information-for-recognition set by the setting part in accordance with the current position information detected by the detector; and
   a controller configured to control at least one of an imaging part and a sound pick-up part in accordance with a recognition result obtained by the recognition part.
(2) The control apparatus according to (1), further including
   an imaging part,
   wherein the recognition part recognizes a given target by analyzing an image captured by the imaging part.
(3) The control apparatus according to (1) or (2),
   wherein the controller performs control in a manner that, in a case where the imaging part or the sound pick-up part successively performs imaging/sound pick-up, a mark is assigned to data that is imaged/sound picked-up at a time at which the recognition part recognizes the given target.
(4) The control apparatus according to (1) or (2),
   wherein the controller controls the imaging part or the sound pick-up part in a manner that the imaging part or the sound pick-up part performs imaging/sound pick-up at a time at which the recognition part recognizes the given target.
(5) The control apparatus according to any one of (1) to (4), further including
   a transmitter configured to transmit to an outside, together with identification information of the control apparatus, data that is imaged/recorded at a time at which the recognition part recognizes the given target.
(6) The control apparatus according to any one of (1) to (5), further including
   a receiver configured to receive from an outside information-for-recognition corresponding to position information.
(7) The control apparatus according to any one of (1) to (6),
   wherein the control apparatus is an external device disposed near a user at an outdoor site or at an indoor site.
(8) The control apparatus according to any one of (1) to (6),
   wherein the control apparatus is a wearable device that is capable of being worn by a user.
(9) The control apparatus according to any one of (1) to (8),
   wherein the setting part sets information-for-recognition selected by a user out of a plurality of pieces of information-for-recognition corresponding to position information.
(10) The control apparatus according to any one of (1) to (9),
   wherein the setting part further sets information-for-recognition on which preference information of a user is reflected.
(11) The control apparatus according to (10),
   wherein the preference information of the user includes a favorite recognition target corresponding to position information, a favorite genre, a favorite composition, or facial recognition information of a family and an acquaintance of the user.
(12) The control apparatus according to any one of (1) to (11),
   wherein, in a case where a current position detected by the detector is inside a given theme park, the setting part sets recognition information that shows a given character as a given target, the character being related to the given theme park and being registered in advance.
(13) The control apparatus according to any one of (1) to (12),
   wherein, in a case where a current position detected by the detector is inside a wedding hall, the setting part sets recognition information that shows a bride and a groom as given targets.
(14) The control apparatus according to any one of (1) to (13),
   wherein, in a case where a favorite genre included in preference information of a user is food, the setting part further sets recognition information showing a dish as a given target.
(15) A storage medium having a program stored therein, the program being for causing a computer to function as:
   a detector configured to detect current position information;
   a setting part configured to set information-for-recognition that varies depending on position information;
   a recognition part configured to recognize a given target shown by the information-for-recognition set by the setting part in accordance with the current position information detected by the detector; and
   a controller configured to control at least one of an imaging part and a sound pick-up part in accordance with a recognition result obtained by the recognition part.

### Reference Signs List

- 1, 1A, 1B: digital camera
- 2, 2A, 2B: external device
- 3: network
- 4: server
- 10, 25: CPU
- 11, 21: ROM
- 12, 22: RAM
- 13, 23: camera module
- 14, 24: operation input part
- 15, 46: information-for-recognition DB
- 16: display part
- 17, 26, 41: communication part
- 18, 28: GPS positioning part
- 19, 47: preference information DB
- 20: storage medium
- 29: database
- 40: main controller
- 43: extraction part
- 44: transmission controller
- 48: shot image DB
- 110: setting part
- 120: recognition part
- 130: shooting controller
- 140: guidance controller

## Claims

1. A control apparatus comprising:
a detector configured to detect current position information;
a setting part configured to set information-for-recognition that varies depending on position information;
a recognition part configured to recognize a given target shown by the information-for-recognition set by the setting part in accordance with the current position information detected by the detector; and
a controller configured to control at least one of an imaging part and a sound pick-up part in accordance with a recognition result obtained by the recognition part.

2. The control apparatus according to claim 1, further comprising
an imaging part,
wherein the recognition part recognizes a given target by analyzing an image captured by the imaging part.

3. The control apparatus according to claim 1,
wherein the controller performs control in a manner that, in a case where the imaging part or the sound pick-up part successively performs imaging/sound pick-up, a mark is assigned to data that is imaged/sound picked-up at a time at which the recognition part recognizes the given target.

4. The control apparatus according to claim 1,
wherein the controller controls the imaging part or the sound pick-up part in a manner that the imaging part or the sound pick-up part performs imaging/sound pick-up at a time at which the recognition part recognizes the given target.

5. The control apparatus according to claim 1, further comprising
a transmitter configured to transmit to an outside, together with identification information of the control apparatus, data that is imaged/recorded at a time at which the recognition part recognizes the given target.

6. The control apparatus according to claim 1, further comprising
a receiver configured to receive from an outside information-for-recognition corresponding to position information.

7. The control apparatus according to claim 1,
wherein the control apparatus is an external device disposed near a user at an outdoor site or at an indoor site.

8. The control apparatus according to claim 1,
wherein the control apparatus is a wearable device that is capable of being worn by a user.

9. The control apparatus according to claim 1,
wherein the setting part sets information-for-recognition selected by a user out of a plurality of pieces of information-for-recognition corresponding to position information.

10. The control apparatus according to claim 1,
wherein the setting part further sets information-for-recognition on which preference information of a user is reflected.

11. The control apparatus according to claim 10,
wherein the preference information of the user includes a favorite recognition target corresponding to position information, a favorite genre, a favorite composition, or facial recognition information of a family and an acquaintance of the user.

12. The control apparatus according to claim 1,
wherein, in a case where a current position detected by the detector is inside a given theme park, the setting part sets recognition information that shows a given character as a given target, the character being related to the given theme park and being registered in advance.

13. The control apparatus according to claim 1,
wherein, in a case where a current position detected by the detector is inside a wedding hall, the setting part sets recognition information that shows a bride and a groom as given targets.

14. The control apparatus according to claim 1,
wherein, in a case where a favorite genre included in preference information of a user is food, the setting part further sets recognition information showing a dish as a given target.

15. A storage medium having a program stored therein, the program being for causing a computer to function as:
a detector configured to detect current position information;
a setting part configured to set information-for-recognition that varies depending on position information;
a recognition part configured to recognize a given target shown by the information-for-recognition set by the setting part in accordance with the current position information detected by the detector; and
a controller configured to control at least one of an imaging part and a sound pick-up part in accordance with a recognition result obtained by the recognition part.
